# EUROPEAN PATENT SPECIFICATION

(11) **EP 3 328 001 B1**
(45) Date of publication and mention of the grant of the patent: **03.07.2019**
(21) Application number: 16382548.2
(22) Date of filing: 23.11.2016
(51) Int. Cl.: H04L 12/40

(54) **COMMUNICATION SYSTEM AND METHOD FOR SIMULTANEOUS DATA TRANSMISSIONS**
KOMMUNIKATIONSSYSTEM UND VERFAHREN FÜR SIMULTANE DATEN-ÜBERTRAGUNGEN
SYSTÈME ET PROCÉDÉ DE COMMUNICATION DE TRANSMISSIONS SIMULTANÉES DE DONNÉES

(43) Date of publication of application: 30.05.2018
(73) Proprietor: Ikerlan, S. Coop., 20500 Arrasate - Mondragon (ES)
(72) Inventor: BILBAO UGALDE, Josu, 20500 Arrasate - Mondragon (ES); ARNAIZ MARTINEZ, Luis Manuel, 20500 Arrasate - Mondragon (ES); GONZALEZ GIL, Antonio, 20120 Hernani (ES)
(74) Representative: Igartua, Ismael

(56) References cited:
- DE-A1- 10 206 239
- US-A1- 2005 206 240
- US-A1- 2012 269 208
- US-A1- 2013 073 760

## Description

### TECHNICAL FIELD

The present invention relates to communication systems and methods for simultaneous data transmissions through one and the same physical medium.

### PRIOR ART

In many industrial installations (or transport systems, for example) communications systems are used for different nodes of said installations to communicate with one another. To that end, the different nodes are connected to at least one given physical medium (wiring), communicating with one another through said physical medium. There can be different types of communications between the different nodes, a different physical medium being used for each type of communication.

At least one bus is used for communications of this type, and a type of bus used in communications of this type is the fieldbus, through which the nodes exchange given information, because said communication is limited in terms of the supported data flow. In contrast, the mentioned bus has a more cost-effective physical medium than those that support a larger data flow.

If new services are to be added or services already existing in an installation comprising a fieldbus are to be modified, it is necessary to add new wiring that supports said new services or said modification. This can complicate the installation of a new communication system due to the new wiring needed, or even worse, it can prevent updating an outdated installation given that it is impossible to make any relevant modifications to same.

Patent document US5975248A, for example, discloses a communication system in which a plurality of nodes and a control unit communicate with one another through a given physical medium, and it discloses that it is not necessary to incorporate new wiring or physical medium for incorporating a new service in a new installation, or making use of the wiring present in an outdated installation for incorporating a new service in said outdated installation. To that end, by means of the communication system the information referring to the new service is transmitted through a second wiring used for feeding the nodes and the central unit, using a given sequence in the feed transmission whereby the information or the data to be transmitted is transmitted or further coded.

US2012269208A1 discloses a method for transferring control signals and data signals, particularly in a motor vehicle. The control signals and the data signals are transferred by a physical medium. The control signals or the data signals are modulated prior to transferring. The modulated signals and the non-modulated signals are sent by the physical medium.

In US2013073760A1 a communication component is disclosed for communication via an AS-i line. In order to provide an improved AS-i communication component for communication via an AS-i line, it is proposed in at least one embodiment that to send and/or receive a standard AS-i signal and an extended AS-i communication signal via an AS-i line, using a shared communication component.

### DISCLOSURE OF THE INVENTION

The present invention is defined in the appended independent claims to which reference should be made. Advantageous features are set out in the appended dependent claims.

### DESCRIPTION OF THE DRAWINGS

Figure 1 schematically shows an embodiment of the communication system for simultaneous data transmissions of the invention.
Figure 2 shows a data sequence sent by means of a field protocol of the system of Figure 1, without an additional protocol sending data.
Figure 3 shows a boundary frequency of the system of Figure 1.
Figure 4 shows the data sequence of Figure 2, as it simultaneously coexists with the additional communication protocol.

### DETAILED DISCLOSURE OF THE INVENTION

The communication system of the invention is adapted for being implemented in industrial and transport installations, preferably elevators, trains and/or wind power facilities, although it could also be implemented in installations of another type, and even in vehicles.

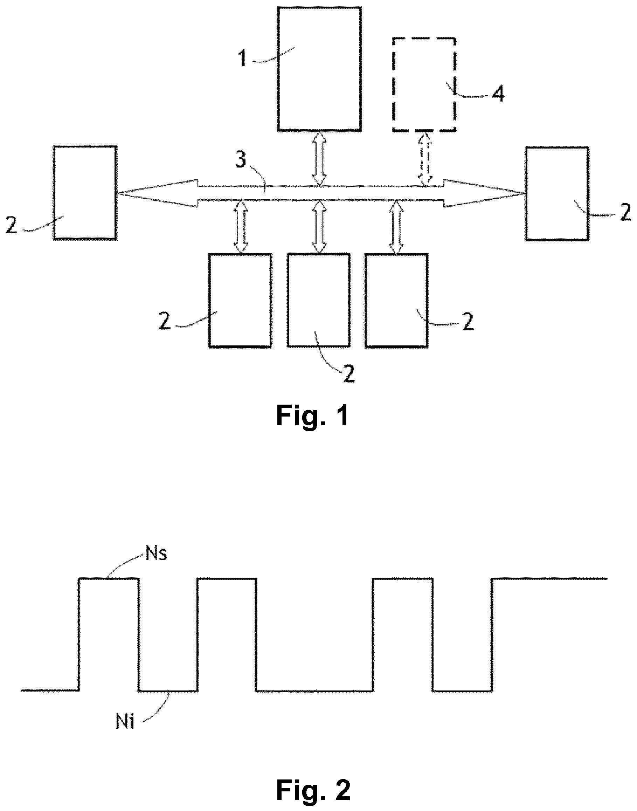

In reference to Figure 1, the communication system of the invention comprises at least one control unit 1, a plurality of nodes 2 which communicate with the control unit 1 and can communicate with one another, and a physical medium 3 (wiring) through which said communications are performed. Both the control unit 1 and the nodes 2 are connected to said physical medium 3. The number of nodes 2 and control units 1 that can be used is not limited, as it is possible to use as many as the installation or vehicle in which the system is implemented requires, for example. An installation in which there was no control unit 1 would even be possible, the plurality of nodes 2 in this case being responsible for managing communications (or at least one of said nodes 2).

The nodes 2 and the control unit 1 communicate with one another through the physical medium 3 by means of a fieldbus and a corresponding field protocol. Preferably, the fieldbus used transmits data in series, through the given physical medium 3, as schematically shown in Figure 2 by way of example (despite the fact that communication can often be differential), the transmitted data corresponding with a *logic level one* (upper levels Ns) and with a *logic level zero* (lower levels Ni), and each change from an upper level Ns to a lower level Ni or vice versa corresponding with a transition, although a different fieldbus could be used, as discussed.

A field protocol does not allow the transmission of a large data flow, such that communications of this type are generally used to transmit information relating to basic indications or signaling (position indicator, entrances/exits, sensors, etc.), or information required for executing orders (which allow, for example, control over auxiliary devices in any installation), for example. Preferably the fieldbus protocol used is CAN (Control Area Network).

In the communications system of the invention, the nodes 2 and the control unit 1 can communicate with one another (and/or the nodes 2 can communicate with one another) through the same physical medium 3 used by the field protocol, furthermore, by means of an additional communication protocol adapted for transmitting a larger data flow than the data flow allowed through the field protocol used today. Therefore, the same type of information as what can be sent through the fieldbus or multimedia information generally requiring a large data flow (images and videos, for example) can be sent through said additional protocol with the same time requirement or longer (deterministic, working in real-time with high demands, robustness, quality of service, etc.). Preferably, the additional protocol is the IP protocol (Internet Protocol), but it could be another protocol adapted for transmitting a large data flow.

Therefore, in an already operating installation comprising a physical medium 3 corresponding to a fieldbus, the communications system of the invention allows including new services through said physical medium 3 for the nodes 2 that are already connected to said physical medium 3, which services may include a large data flow, for example, such as a monitoring system or any other required service, without having to add a new physical medium (wiring) and without interfering with or interrupting the already existing communication (services already existing with the field protocol) in said installation. At least one additional node 4 could even be included, said additional node 4 being able to support a new service, without adding any wiring, and without interfering with or interrupting the already existing communication (obviously at least one cable would have to be arranged between said additional node 4 and the physical medium 3 for connecting said additional node 4 to said physical medium 3). This is furthermore advantageous for installations in which, due to complexity and/or cost, new wiring cannot be added, or the installation and operation between already existing nodes 2 (and control unit 1 if there is one) is not to be modified, and new services are to be added.

Likewise, new installations (or vehicles, for example) comprising the communication system of the invention can include, in addition to the services characteristic of communication by means of a field protocol, additional services requiring a larger data flow than the data flow allowed through said field protocol, with less wiring being needed, involving a drop in the cost of the installation itself and a simpler and quicker assembly.

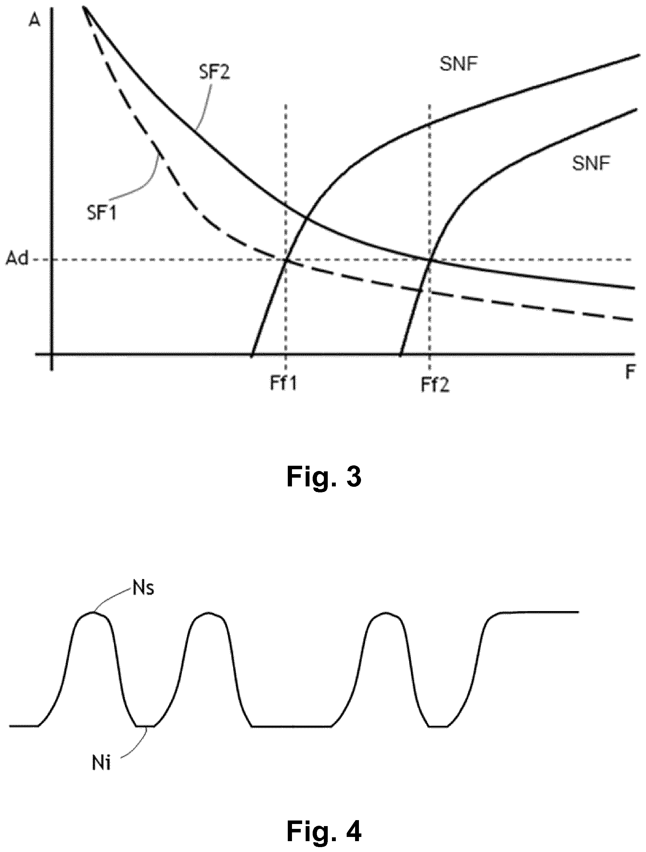

A boundary frequency Ff1 or Ff2 above which the additional protocol is transmitted through the physical medium 3 is determined in the system of the invention. Said boundary frequency Ff1 or Ff2 is high enough for a transmission by means of the additional protocol to not significantly alter the data transmitted through the field protocol, such that both protocols simultaneously coexist in said physical medium 3, and there may be a frequency overlap without involving a loss of information. The two protocols coexisting in the same physical medium 3 do not affect one another. As an example, the new multimedia flow would not interrupt the control flow of the fieldbus, a high quality of service (QoS) thus being maintained, with multimedia and control flows converging. The expression "not significantly alter data" must be understood to mean that even though the corresponding signal is modified (see example of Figure 2 compared to Figure 4 by way of example), the corresponding data is not lost or modified.

The boundary frequency Ff1 or Ff2 is determined dynamically, although in examples not part of the invention it could also be done in a static manner. In summary, the boundary frequency Ff1 or Ff2 is the minimum frequency at which data transmission through the additional protocol does not put the information transmitted through the physical medium 3 by means of the field protocol at risk, in the sense of information transmitted with said field protocol being lost, despite only slightly interfering in its frequency spectrum.

When the boundary frequency Ff1 or Ff2 is determined in a static manner, said boundary frequency Ff1 or Ff2 is set to a given frequency which is high enough for the additional protocol to not alter the data transmitted by means of the field protocol in any case. In this case, the boundary frequency Ff1 or Ff2 can be established ex-factory, before being installed the system; it can even be done with the system already installed, for example, one of the nodes 2 or the control unit 1 making said determination or said determination being made otherwise.

When the boundary frequency Ff1 or Ff2 is determined dynamically, said boundary frequency Ff1 or Ff2 depends on the spectrum of the information transmitted (or data transmitted) by means of the field protocol. The greater the number of transitions of the data present in said transmission, and therefore the higher the frequency spectrum of said information, the higher the boundary frequency (it goes from Ff1 to Ff2).

By way of example, Figure 3 depicts the envelope SF1 of a first frequency spectrum of a transmission performed by means of the field protocol for the case in which the number of transitions is low, and the envelope SF2 of a second frequency spectrum of a transmission performed by means of said field protocol for the case in which the number of transitions is higher than the preceding case (the y-axis represents the value proportional to the amplitude A of the signal, and the x-axis represents frequency F). Figure 3 further depicts the envelope SNF1 of a first frequency spectrum corresponding to the new communication coexisting with SF1, and a possible second case with the envelope SNF2 of a second frequency spectrum of said new communication coexisting with SF2. In the first case, the boundary frequency corresponds with value Ff1 and in the second case with value Ff2. Preferably, the boundary frequency Ff1 or Ff2 is established when the proportional value of amplitude A of the transmission reaches a given value Ad. Dynamic determination offers better use of the bandwidth of the physical medium 3. The higher the value Ad, the higher the risk of the data transmitted by means of the field protocol being altered due to the disturbance of its spectrum. Figure 2 shows a sequence of said data without any information whatsoever being transmitted through the physical medium 3 by means of the field protocol, and Figure 4 shows the same sequence but data being simultaneously transmitted by means of the additional protocol through said physical medium 3. As can be seen in said Figure 4, as both protocols are made to be simultaneous, the additional protocol causes distortions in the data transmitted by means of the field protocol but it does not alter it, i.e., no data is lost. The transitions are distorted, going from being substantially vertical to being slightly inclined, but information is not lost. Therefore, operative coexistence of both protocols is obtained.

If the boundary frequency Ff1 or Ff2 is dynamic, there are different possibilities for controlling said boundary frequency Ff1, Ff2. One possibility, for example, is for it to be the actual node 2 or additional node 4 or any node 2 (or control unit 1) that is going to perform the transmission that determines the boundary frequency Ff1 or Ff2. Another possibility, for example, is for it to always be the same node 2 or 4 (or the control unit 1) that determines the boundary frequency Ff1 or Ff2 in each case. Another possibility, for example, is for the system of the invention to comprise a configuration tool (not depicted in the drawings), said tool being responsible for determining the boundary frequency Ff1 or Ff2.

A second aspect of the invention relates to a method for simultaneous data transmissions between different nodes 2 through one and the same physical medium 3 (wiring) to which said nodes 2 are connected. A first communication between nodes 2 is established by means of a field protocol and a corresponding fieldbus through said physical medium 3, and a second simultaneous communication between nodes 2 is established by means of an additional communication protocol adapted for supporting information or data flow larger than the data flow that the field protocol is able to support, through the same physical medium 3. Furthermore, a boundary frequency Ff1 or Ff2 is determined above which the data is transmitted by means of the additional protocol, and below which the data is transmitted by means of the field protocol, said boundary frequency Ff1 or Ff2 being high enough for the transmission by means of the additional protocol to not significantly alter the data transmitted by means of the field protocol, avoiding the loss of information transmitted by means of said field protocol, such that both protocols simultaneously coexist in the physical medium 3 of the fieldbus. The expression "not significantly alter data" must be understood to mean that even though the signal is modified (see example of Figure 2 compared to Figure 4 by way of example), data is not lost.

Preferably, the fieldbus protocol used is CAN (Control Area Network), and the additional protocol is the IP protocol (Internet Protocol).

The boundary frequency Ff1 or Ff2 is determined dynamically, depending on the amount of data and/or on the data transmitted by means of the field protocol, although a set value could also be established for said boundary frequency Ff1 or Ff2 in examples not part of the invention, independently of the amount of data and/or of the data transmitted by said field protocol. When the boundary frequency Ff1 or Ff2 is determined dynamically, said determination preferably depends on the number of transitions in the data transmitted by means of the field protocol (in a given time), the term transitions being understood to mean steps, in the digital environment, of the transmitted digital signal and comprising said data from logic level one to logic level zero or vice versa. A higher boundary frequency Ff1 or Ff2 is preferably determined the more transitions there are in a unit of time in said data transmitted by means of the field protocol, and a lower boundary frequency Ff1 or Ff2 is preferably determined the fewer transitions there are in a unit of time in said data.

## Claims

1. Communication system for simultaneous data transmissions, comprising a physical medium (3) and a plurality of nodes (2) connected to the physical medium (3) and communicating with one another through said physical medium (3), the nodes (2) being adapted for communicating with one another through the physical medium (3) by means of a field protocol and a corresponding fieldbus, and simultaneously by means of an additional communication protocol adapted for supporting a data flow larger than the data flow that the field protocol is able to support, the nodes (2) being adapted for communicating by means of the field protocol in a frequency spectrum below a boundary frequency (Ff1, Ff2) and for communicating by means of the additional protocol in a frequency spectrum above said boundary frequency (Ff1, Ff2), **characterized in that** the system is configured for dynamically adjusting the boundary frequency (Ff1, Ff2), depending on the information transmitted by means of the field protocol, and for establishing a higher boundary frequency (Ff1, Ff2) the more the transitions there are in the data transmitted by means of the field protocol, and a lower boundary frequency (Ff1, Ff2) the fewer the transitions there are in said data, the transmitted data corresponding with upper levels (Ns) and with lower levels (Ni) and each change from an upper level (Ns) to a lower level (Ni) or vice versa corresponding with a transition, such that said boundary frequency (Ff1, Ff2) is high enough to prevent what is transmitted by means of said additional protocol from losing or modifying the data transmitted by means of the field protocol, avoiding the loss of information transmitted by means of said field protocol, such that both protocols simultaneously coexist on the same physical medium (3) of the fieldbus.

2. System according to claim 1, wherein each node (2) is adapted for dynamically adjusting the value of the boundary frequency (Ff1, Ff2) for the transmissions said node (2) makes.

3. System according to claim 1, wherein one of the nodes (2) is adapted for dynamically adjusting the value of the boundary frequency (Ff1, Ff2) for each transmission.

4. System according to any of the preceding claims, wherein the fieldbus is a Controller Area Network, CAN, fieldbus and the additional protocol is an IP protocol.

5. Elevator, **characterized in that** it comprises a communication system according to any of the preceding claims.

6. Train, **characterized in that** it comprises a communication system according to any of claims 1 to 4.

7. Wind tower, **characterized in that** it comprises a communication system according to any of claims 1 to 4.

8. Method for simultaneous data transmissions between different nodes (2) through one and the same physical medium (3) to which said nodes (2) are connected, a first communication between nodes (2) being established by means of a field protocol and a corresponding fieldbus, and a second communication between nodes (2) being established by means of an additional communication protocol adapted for supporting data flow that is larger than the data flow allowed by the field protocol, through the same physical medium (3), and a boundary frequency (Ff1, Ff2) being determined above which the data is transmitted by means of the additional protocol and below which the data is transmitted by means of the field protocol, **characterized in that** the boundary frequency (Ff1, Ff2) is determined dynamically depending on the data transmitted by means of the field protocol, and a higher boundary frequency (Ff1, Ff2) is determined the more the transitions there are in the data transmitted by means of the field protocol, and a lower one is determined the fewer the transitions there are in said data, the transmitted data corresponding with upper levels (Ns) and with lower levels (Ni) and each change from an upper level (Ns) to a lower level (Ni) or vice versa corresponding with a transition, such that said boundary frequency (Ff1, Ff2) is high enough for the additional communication protocol to not lose or modify the data transmitted by means of the field protocol, avoiding the loss of information transmitted by means of said field protocol, such that both protocols simultaneously coexist in the physical medium (3) of the fieldbus.

9. Method according to claim 8, wherein a new value for the boundary frequency (Ff1, Ff2) is established when the proportional value of the amplitude (A) of the transmission by means of the field protocol reaches a given value (Ad).

## Patentansprüche

1. Kommunikationssystem für simultane Datenübertragung, umfassend ein physikalisches Medium (3) und eine Vielzahl von Knoten (2), die mit dem physikalischen Medium (3) verbunden sind und über das genannte physikalische Medium (3) miteinander kommunizieren, wobei die Knoten (2) geeignet sind, mittels eines Feldprotokolls und eines entsprechenden Feldbusses über das physische Medium (3) miteinander zu kommunizieren, und dies simultan mittels eines zusätzlichen Kommunikationsprotokolls, das zur Unterstützung eines Datenflusses geeignet ist, der größer als der von dem Feldprotokoll unterstützte Datenfluss ist, wobei die Knoten (2) zur Kommunikation in einem Frequenzspektrum unterhalb einer Grenzfrequenz (Ff1, Ff2) mittels des Feldprotokolls und zur Kommunikation in einem Frequenzspektrum oberhalb der genannten Grenzfrequenz (Ff1, Ff2) mittels des Zusatzprotokolls geeignet sind, **dadurch gekennzeichnet, dass** das System ausgelegt ist zur dynamischen Anpassung der Grenzfrequenz (Ff1, Ff2) in Abhängigkeit von den mittels des Feldprotokolls übertragenen Informationen, wobei die festgelegte Grenzfrequenz (Ff1, Ff2) umso höher ist, je mehr Übergänge in den mittels des Feldprotokolls übertragenen Daten bestehen, und umso niedriger ist, je weniger Übergänge in den genannten Daten bestehen, wobei die übertragenen Daten Oberniveaus (Ns) und Unterniveaus (Ni) entsprechen und jeder Wechsel von einem Oberniveau (Ns) zu einem Unterniveau (Ni) oder umgekehrt einem Übergang entspricht, wobei die genannte Grenzfrequenz (Ff1, Ff2) hoch genug ist, um zu verhindern, dass durch die mittels des genannten Zusatzprotokolls erfolgten Übertragungen die mittels des Feldprotokolls übertragenen Daten verloren gehen oder modifiziert werden, wodurch der Verlust von mittels des genannten Feldprotokolls übertragenen Informationen vermieden wird, so dass beide Protokolle auf dem gleichen physikalischen Medium (3) des Feldbusses gleichzeitig nebeneinander existieren.

2. System nach Anspruch 1, wobei jeder Knoten (2) dazu geeignet ist, den Wert der Grenzfrequenz (Ff1, Ff2) für die von dem genannten Knoten (2) durchgeführten Übertragungen dynamisch anzupassen.

3. System nach Anspruch 1, wobei einer der Knoten (2) dazu geeignet ist, den Wert der Grenzfrequenz (Ff1, Ff2) für jede Übertragung dynamisch anzupassen.

4. System nach einem der vorstehenden Ansprüche, wobei der Feldbus ein Controller Area Network (CAN)-Feldbus und das Zusatzprotokoll ein IP-Protokoll ist.

5. Aufzug, **dadurch gekennzeichnet, dass** er ein Kommunikationssystem nach einem der vorstehenden Ansprüche umfasst.

6. Zug, **dadurch gekennzeichnet, dass** er ein Kommunikationssystem nach einem der Ansprüche 1 bis 4 umfasst.

7. Windturm, **dadurch gekennzeichnet, dass** er ein Kommunikationssystem nach einem der Ansprüche 1 bis 4 umfasst.

8. Verfahren zur simultanen Datenübertragung zwischen verschiedenen Knoten (2) über ein und dasselbe physikalische Medium (3), mit dem die genannten Knoten (2) verbunden sind, unter Herstellung einer ersten Kommunikation zwischen Knoten (2) mittels eines Feldprotokolls und eines entsprechenden Feldbusses und Herstellung einer zweiten Kommunikation zwischen Knoten (2) mittels eines zusätzlichen Kommunikationsprotokolls, das so ausgelegt ist, dass es einen größeren als den durch das Feldprotokoll zugelassenen Datenfluss durch das gleiche physikalische Medium (3) unterstützt, wobei eine Grenzfrequenz (Ff1, Ff2) festgelegt wird, oberhalb derer die Daten mittels des Zusatzprotokolls übertragen werden und unterhalb derer die Daten mittels des Feldprotokolls übertragen werden, **dadurch gekennzeichnet, dass** die Grenzfrequenz (Ff1, Ff2) in Abhängigkeit der von den mittels des Feldprotokolls übertragenen Daten dynamisch festgelegt wird, wobei die festgelegte Grenzfrequenz (Ff1, Ff2) um so höher ist, je mehr Übergänge in den mittels des Feldprotokolls übertragenen Daten bestehen, und um so niedriger ist, je weniger Übergänge in den genannten Daten bestehen, wobei die übertragenen Daten Oberniveaus (Ns) und Unterniveaus (Ni) entsprechen und jeder Wechsel von einem Oberniveau (Ns) zu einem Unterniveau (Ni) oder umgekehrt einem Übergang entspricht, wobei die genannte Grenzfrequenz (Ff1, Ff2) hoch genug ist, damit das zusätzliche Kommunikationsprotokoll die mittels des Feldprotokolls übertragenen Daten nicht verliert oder modifiziert, wodurch der Verlust von mittels des genannten Feldprotokolls übertragenen Informationen vermieden wird, so dass beide Protokolle auf dem gleichen physikalischen Medium (3) des Feldbusses gleichzeitig nebeneinander existieren.

9. Verfahren nach Anspruch 8, wobei ein neuer Wert für die Grenzfrequenz (Ff1, Ff2) festgelegt wird, wenn der proportionale Wert der Amplitude (A) der Übertragung mittels des Feldprotokolls einen vorgegebenen Wert (Ad) erreicht.

## Revendications

1. Système de communication de transmissions simultanées de données, comprenant un support physique (3) et une pluralité de noeuds (2) connectés au support physique (3) et communiquant entre eux à travers ledit support physique (3), les noeuds (2) étant adaptés pour communiquer entre eux à travers le support physique (3) au moyen d'un protocole de terrain et un bus de terrain correspondant, et simultanément au moyen d'un protocole de communication additionnel adapté pour supporter un flux de données plus grand que le flux de données que le protocole de terrain est capable de supporter, les noeuds (2) étant adaptés pour communiquer au moyen du protocole de terrain dans un spectre de fréquences inférieur à une fréquence limite (Ff1, Ff2) et pour communiquer au moyen du protocole additionnel dans un spectre de fréquences supérieur à ladite fréquence limite (Ff1, Ff2), **caractérisé en ce que** le système est configuré pour ajuster dynamiquement la fréquence limite (Ff1, Ff2), en fonction des informations transmises au moyen du protocole de terrain, et pour établir une fréquence limite supérieure (Ff1, Ff2) plus il y a de transitions dans les données transmises au moyen du protocole de terrain, et une fréquence limite inférieure (Ff1, Ff2) moins il y a de transitions dans lesdites données, les données transmises correspondant aux niveaux supérieurs (Ns) et aux niveaux inférieurs (Ni) et chaque passage d'un niveau supérieur (Ns) à un niveau inférieur (Ni) ou vice versa correspondant à une transition, de telle sorte que ladite fréquence limite (Ff1, Ff2) soit suffisamment élevée pour empêcher que ce qui est transmis au moyen dudit protocole additionnel ne perde ou ne modifie les données transmises au moyen du protocole de terrain, évitant la perte d'informations transmises au moyen dudit protocole de terrain, de sorte que les deux protocoles coexistent simultanément sur le même support physique (3) du bus de terrain.

2. Système selon la revendication 1, dans lequel chaque noeud (2) est adapté pour ajuster dynamiquement la valeur de la fréquence limite (Ff1, Ff2) pour les transmissions que ledit noeud (2) effectue.

3. Système selon la revendication 1, dans lequel l'un des noeuds (2) est adapté pour ajuster dynamiquement la valeur de la fréquence limite (Ff1, Ff2) pour chaque transmission.

4. Système selon l'une quelconque des revendications précédentes, dans lequel le bus de terrain est un bus de terrain de Controller Area Network, CAN, et le protocole additionnel est un protocole IP.

5. Ascenseur, **caractérisé en ce qu'**il comprend un système de communication selon l'une quelconque des revendications précédentes

6. Train, **caractérisé en ce qu'**il comprend un système de communication selon l'une quelconque des revendications 1 à 4.

7. Tour éolienne, **caractérisée en ce qu'**elle comprend un système de communication selon l'une quelconque des revendications 1 à 4.

8. Procédé de transmissions simultanées de données entre différents noeuds (2) par l'intermédiaire d'un seul et même support physique (3) auquel lesdits noeuds (2) sont connectés, une première communication entre noeuds (2) étant établie au moyen d'un protocole de terrain et d'un bus de terrain correspondant, et une seconde communication entre noeuds (2) étant établie au moyen d'un protocole de communication additionnel adapté pour supporter un flux de données supérieur au flux de données permis par le protocole de terrain, à travers le même support physique (3), et une fréquence limite (Ff1, Ff2) étant déterminée au-dessus de laquelle les données sont transmises au moyen du protocole additionnel et au-dessous de laquelle les données sont transmises au moyen du protocole de terrain, **caractérisé en ce que** la fréquence limite (Ff1, Ff2) est déterminée de façon dynamique en fonction des données transmises au moyen du protocole de terrain, et une fréquence limite supérieure (Ff1, Ff2) est déterminée plus il y a de transitions dans les données transmises au moyen du protocole de terrain, et une fréquence limite inférieure est déterminée moins il y a de transitions dans lesdites données, les données transmises correspondant aux niveaux supérieurs (Ns) et aux niveaux inférieurs (Ni) et chaque passage d'un niveau supérieur (Ns) à un niveau inférieur (Ni) ou vice versa correspondant à une transition, de telle sorte que ladite fréquence limite (Ff1, Ff2) soit suffisamment élevée pour que le protocole de communication additionnel ne perde pas ou ne modifie pas les données transmises au moyen du protocole de terrain, évitant la perte d'informations transmises au moyen dudit protocole de terrain, de telle sorte que les deux protocoles coexistent simultanément dans le support physique (3) du bus de terrain.

9. Procédé selon la revendication 8, dans lequel une nouvelle valeur pour la fréquence limite (Ff1, Ff2) est établie lorsque la valeur proportionnelle de l'amplitude (A) de la transmission au moyen du protocole de terrain atteint une valeur donnée (Ad).
